# EUROPÄISCHE PATENTSCHRIFT

(11) **EP 3 717 803 B1**
(45) Veröffentlichungstag und Bekanntmachung des Hinweises auf die Patenterteilung: **22.02.2023**
(21) Anmeldenummer: 18807245.8
(22) Anmeldetag: 15.11.2018
(51) Int. Cl.: F16J 9/12, F16J 9/26

(54) **KOLBENRING FÜR ZWEITAKTMOTOREN MIT EINER VERSCHLEISSANZEIGE**
PISTON RING FOR TWO-STROKE ENGINES WITH A WEAR DISPLAY
SEGMENT DE PISTON DESTINÉ À DES MOTEURS À DEUX TEMPS ET DOTÉ D'UN INDICATEUR D'USURE

(30) Priorität: 23.03.2018 DE 102018106983
(43) Veröffentlichungstag der Anmeldung: 07.10.2020
(73) Patentinhaber: Federal-Mogul Burscheid GmbH, 51399 Burscheid (DE)
(72) Erfinder: BUCHMANN, Michael, 81249 München (DE); SCHÄFTER, Robert, 40477 Düsseldorf (DE); SCHMIDT, Peter, 51399 Burscheid (DE)
(74) Vertreter: Kurig, Thomas
(86) Internationale Anmeldenummer: PCT/EP2018/081408
(87) Internationale Veröffentlichungsnummer: WO 2019/179643

(56) Entgegenhaltungen:
- DE-A1-102011 078 655
- DE-A1-102013 205 912

## Beschreibung

Die vorliegende Erfindung betrifft einen Kolbenring für Zweitaktmotoren, bevorzugt Großkolben- Zweitaktmotoren, wobei der Kolbenring mit einer Verschleißanzeige versehen ist.

Bisherige Lösungen zur Bestimmung einer Restdicke eines Kolbenrings, insbesondere bei Zweitakt-Motoren, umfassen eine Verwendung eines Ultraschallkopfes, mit dem eine Restdicke des Kolbenrings selbst oder eine Restdicke einer Beschichtung einer Lauffläche eines Kolbenrings ermittelt werden kann. Eine solche Verschleißbestimmung wird üblicherweise durch Kalibrierungsanforderungen und eine unbequeme Handhabung der Ultraschallgeräte erschwert.

Aus dem Patentdokument DE102013205912 A1 ist bekannt, vor der Beschichtung eines Kolbenrings Verschleißmarken an einer Oberfläche eines Kolbenrings anzubringen, wobei bei fortschreitendem Verschleiß eine Restdicke der Beschichtung erkannt werden kann.

Aus Dokument DE102011078655 A1 ist bereits grundsätzlich eine Kupferschicht bei einem Indikatorstab bekannt.

Aus dem Dokument US4143319 A ist eine magnetische Bestimmung von Kolbenringverschleiß bekannt.

Das Dokument JPS6175207 (A) offenbart eine Kolbenring-Verschleißmessung, bei der ein Kolbenring der zu einem Schlitz in dem Zylinder eines Zweitaktmotors bewegt wird, mittels eines Ultraschallsensors vermessen wird.

Aus dem Dokument US4143319 A sind Metallbeschichtungen bekannt, die mittels PVD und PECVD auf Kolben von Kolbenmotoren aufgetragen werden.

Das Dokument DE102014011139 Aloffenbart thermisch gespritzte Haftvermittlerschichten, zwischen einem Substrat und einer Schicht, die einen Kupferanteil aufweisen kann.

Aus dem Dokument DE19956622 A1 sind Kolbenringe bekannt, die thermische Spritz-Beschichtungen mit einer Aluminiumbronze verwenden, wobei ein Kupfergehalt von über 80% verwendet wird.

Es ist daher wünschenswert, ein Verfahren und/oder einen Kolbenring zur Verfügung zu haben, mit dem es schnell und einfach möglich ist, einen aktuell vorliegenden Verschleißzustand zu ermitteln, und so zu bestimmen, ob ein Kolbenring ausgetauscht werden muss oder ob es noch möglich ist, einen nächsten Betriebszyklus mit dem Kolbenring in dem vorliegenden Verschleißzustand durchzuführen, bevor ein Austausch unerlässlich ist.

Gemäß der vorliegenden Erfindung wird ein Kolbenring für Zweitaktmotoren mit einer Verschleißanzeige mit den Merkmalen des Anspruchs 1 bereitgestellt, wobei bevorzugte Ausführungen in den abhängigen Ansprüchen beschrieben sind.

Es wird ein Kolbenring für Zweitaktmotoren mit einer Verschleißanzeige bereitgestellt, wobei der Kolbenring einen Kolbenringkörper mit einer Außenseite, zwei Kolbenringflanken und einer Kolbenringinnenfläche umfasst, und wobei mindestens zwei radial übereinanderliegende Lagen thermisch gespritzter Schichten vorgesehen sind, aus mindestens zwei verschiedenen Farben in einer festen Reihenfolge aufweisen, wobei die radial unterste Lage bzw. unterste Lagen durch Beimischung von Cu oder CuFeAl, rötlich ausgeführt sind, wobei bevorzugt der Kupferanteil der untersten Lage bzw. untersten Lagen zwischen 30 und 50 Gew.-% beträgt.

Die Kennzeichnung und vor allem die Farbreihenfolge soll dabei auch bei mehreren Lagen immer die gleiche sein. Bei einer bekannten Reihenfolge der Farben in aufeinanderliegenden Lagen oder Schichten kann ganz einfach anhand der Farbfolge festgestellt werden, ob ein Farbübergang zu einer radial tieferen oder einer radial höheren Schicht gehört. Dies vereinfacht eine Auswertung der Verschleißbilder der Kolbenringe beträchtlich. So kann ohne Nachmessen sofort ermittelt werden, wo übermäßiger Verschleiß auftritt und wo weniger Verschleiß als erwartet stattfindet. Durch eine farbliche Hervorhebung kann mit einem Blick z.B. durch die Spülkanäle des Zylinders einfach festgestellt werden, ob der Kolbenring bereits kritisch verschlissen ist, oder noch weiter eingesetzt werden kann. Ein hoher Anteil an Kupfer kann eine Lage deutlich Rot bzw. kupferfarbig einfärben und gestattet so eine besonders einfache farbliche Kennzeichnung der Lage als Verschleißschutzschicht.

Bevorzugt sind mindestens drei radial übereinander liegende Lagen thermisch gespritzter Schichten vorgesehen, die mit (mindestens) drei verschiedenen Farben in einer festen Reihenfolge gekennzeichnet sind. Bei dieser Ausführung sind ein oder mehrere thermisch gespritzte Lagen übereinander auf der Lauffläche angeordnet.

Bei einer anderen Ausführungsform des Kolbenrings umfasst dieser mindestens eine thermisch gespritzte Lage, die sich spiralförmig in Umfangsrichtung um die Lauffläche erstreckt. Diese spiralförmige Lage erstreckt sich dabei mindestens 2 mal um den gesamten Kolbenring.

Die spiralförmige thermisch gespritzte Lage umfasst bevorzugt in Umfangsrichtung einen Materialgradienten. Dabei wird auf einen geschlossenen Ring oder auf einen offenen Ring, der entsprechend eingespannt ist, zumindest in einem Bereich eine einzige thermisch gespritzte Lage aufgebracht, wobei jeweils nach einer Umdrehung bzw. nach einer Umrundung des Kolbenrings eine Materialzusammensetzung der thermisch gespritzten Lage verändert werden kann, wodurch beispielsweise in einem einzigen Arbeitsgang mindestens eine optionale Notlaufschicht, mindestens eine Verschleißkennzeichnungsschicht, mindestens eine, bevorzugt mehrere Verschleißschutzschichten und mindestens eine, bevorzugt mehrere Einlaufschichten durch die eine spiralförmig thermisch gespritzte Lage hergestellt werden kann.

Bei einer Ausführungsform des Kolbenrings ist mindestens eine unterste oder eine untere thermisch gespritzte Lage oder ein Anfangsbereich einer spiralförmig thermisch gespritzten Lage mit einem Füllstoff versehen, der dieser Lage oder dem Anfangsbereich eine charakteristische Farbe verleiht. Damit kann eine Verschleißindikatorschicht an dem Kolbenring angebracht werden.

Eine weitere Ausführung des Kolbenrings umfasst mindestens eine unterste thermisch gespritzte Lage oder einen Anfangsbereich einer spiralförmig thermisch gespritzten Lage mit einem Füllstoff, der der Lage oder dem Anfangsbereich eine Notlaufeigenschaft verleiht. Weiter umfasst diese Ausführung mindestens eine mittlere Lage oder einen Mittelbereich einer spiralförmig thermisch gespritzten Lage mit einem Füllstoff, der der mindestens einen mittleren Lage oder einem Mittelbereich einer spiralförmig thermisch gespritzten Lage Verschleißeigenschaften verleiht. Weiterhin ist bei dieser Ausführungsform mindestens eine obere Lage oder ein Endbereich einer spiralförmig thermisch gespritzten Lage als eine Einlaufschicht ausgeführt, wobei in die Lage bzw. den Bereich Festschmierstoffe eingebracht sind. Durch die Festschmierstoffe wird erreicht, dass sich der Kolbenring langsam an die Form des Zylinders anpassen kann, während in einer Einlaufphase durch die Festschmierstoffe ein zu großer Verschleiß sowohl der Lauffläche des Kolbenrings als auch einer Zylinderinnenfläche vermieden wird. In dieser Kombination kann eine relativ hohe Einsatzzeit für den Kolbenring erreicht werden. Durch eine farbliche Hervorhebung mindestens der untersten oder der zweituntersten Lage bzw. Bereichs kann zudem sichergestellt werden, dass ein fortgeschrittener Verschleiß des Kolbenrings durch einfache optische Mittel, beispielsweise durch Öffnungen im Zylinder (wie beispielsweise von Spühlkanälen bei Zweitaktmotoren) festgestellt werden kann, ob der Kolbenring ausgetauscht werden muss oder noch weiter eingesetzt werden kann. Damit ist es möglich, ohne Probleme bei jedem Stillstand des Motors den Zustand der Kolbenringe zu überprüfen, sodass relativ einfach festgestellt werden kann, ob eine unterste oder zweitunterste Lage schon verwendet wird, oder ob noch genug Zeit bis zu einem nächsten Wartungsintervall vorliegt.

In einer weiteren Ausführungsform des vorliegenden Kolbenrings ist eine unterste thermisch gespritzte Lage oder ein Anfangsbereich einer spiralförmig thermisch gespritzte Lage mit einem Füllstoff versehen, der dieser Lage oder dem Anfangsbereich eine Notlaufeigenschaft verleiht. Eine unterste thermisch gespritzte Schicht wird bevorzugt mit einem hohen Anteil von harten Materialien wie Al₂O₃ gespritzt, um bei einem vollständigen Verschleiß der darüber liegenden thermisch gespritzten Schichten noch eine Einsatzfähigkeit des Kolbenrings bis zu einem nächsten Austausch zu ermöglichen. Beimischungen von Al₂O₃ führen zu einer weißen Schichtfärbung. Dabei sollte insbesondere der Verschleiß der letzten Schicht vor dem Grundmaterial des Kolbenrings geschont werden.

Bei einer weiteren Ausführung des Kolbenrings umfasst dieser mindestens eine unterste thermisch gespritzte Lage oder einen Anfangsbereich einer spiralförmig thermisch gespritzten Lage mit Al₂O₃. Durch den Zusatzstoff Al₂O₃ wird eine harte Spritzschicht bereitgestellt, die eine längere Zeit eingesetzt werden kann, und verhindern soll, dass auch wenn alle anderen darüberliegenden Schichten oder Lagen oder Lagenbereiche abgetragen sind, der Kolbenring mit geringem Verschleiß zumindest noch bis zu einem zu erreichenden Ziel eingesetzt werden kann. Dieser Aspekt ist wichtig, da die vorliegenden Kolbenringe insbesondere in Schiffsdieseln zum Einsatz kommen sollen, wobei es wichtig ist, dass das Schiff noch unter Maschinenkraft einen nächsten Hafen oder einen Zielhafen erreichen kann, wo ein Kolbenring ausgetauscht werden kann. Ein Austausch eines Kolbenrings auf See würde zu einer Manövrierunfähigkeit des Schiffes mit der erheblichen Gefahr eines Totalverlustes führen.

Bei einer weiteren Ausführungsform des Kolbenrings umfasst mindestens eine thermisch gespritzte untere Zwischenlage oder ein Zwischenbereich einer spiralförmig thermisch gespritzten Lage Cu oder Cu Legierungen, wobei der Kupferanteil der Zwischenlage bzw. des Zwischenbereichs zwischen 30 und 50 Gew.-% der Lage beträgt.

Bei einer anderen Ausführung des Kolbenrings umfasst mindestens eine thermisch gespritzte obere Einlauflage oder ein Endbereich einer spiralförmig thermisch gespritzte Lage Mo, Ni, Cr, Cr₃C₂, Mo₂C oder eine Kombination davon als Hartphasen. Die genannten Hartstoffe gestatten ein langsames Anpassen der Lauffläche bzw. der gespritzten Lagen des Kolbenrings an eine Innenkontur einer Zylinderinnenwand.

Bei einer weiteren Ausführung des Kolbenrings weist die mindestens eine thermisch gespritzte Lage oder die spiralförmig thermisch gespritzte Lage eine jeweilige Lagendicke von 20-30µm auf.

Bei einer zusätzlichen Ausführung des Kolbenrings sind mehrere mittlere thermisch gespritzte Lagen vorhanden oder ein Mittelbereich einer spiralförmig thermisch gespritzten Lage erstreckt sich mehrfach um den gesamten Kolbenring, wobei jeweils zwei aufeinanderliegende Lagen mit verschiedenen Zusatzstoffen farblich voneinander abgesetzt sind. Diese Ausführung gestattet es, ein Verschleißbild des Kolbenrings genauer und einfacher beurteilen zu können, dh wie der Verschleiß am Kolbenring auftritt, und vor allem wie gleichmäßig der Kolbenring in Bezug auf die Axialrichtung und die Umfangsrichtung verschleißt.

Die beiden obengenannten Ausführungen gestatten es ebenfalls, sofern sich der Kolbenring nicht beliebig in der Kolbenringnut drehen kann, festzustellen, ob der Zylinder von einer runden Form abweicht, und ob somit ein bestimmtes Verschleißbild durch Eigenschaften des Zylinders bedingt sind, die einen einseitigen oder ungleichmäßigen Verschleiß erzeugen.

Bei einer weiteren Ausführung des Kolbenrings weist die mindestens eine unterste thermisch gespritzte Lage oder ein Anfangsbereich einer spiralförmig thermisch gespritzten Lage eine Dicke zwischen 10 und 60 bevorzugt zwischen 20 und 30µm auf. Bei dieser Ausführung weist die mindestens eine thermisch gespritzte Zwischenlage oder der Zwischenbereich einer spiralförmig thermisch gespritzten Lage eine Dicke zwischen 10 und 120 bevorzugt zwischen 20 und 60µm auf. Bei der gleichen Ausführungsform weist die mindestens eine mittlere thermisch gespritzte Lage oder der Mittelbereich einer spiralförmig thermisch gespritzten Lage eine Gesamtdicke zwischen 100 und 600 bevorzugt zwischen 200 und 400µm auf. Weiterhin weist mindestens eine obere Einlauflage oder der obere Einlaufbereich einer spiralförmig thermisch gespritzten Lage eine Gesamtdicke zwischen 100 und 600 bevorzugt zwischen 200 und 400µm auf. Diese Ausführung betrifft eine momentan bevorzugte Ausführung, bei der die Reihenfolge und die Dicken der einzelnen Lagen einen besonders guten Kolbenring mit einer Verschleißindikatorschicht (der Zwischenlage) und Notlaufeigenschaften bereitstellt.

In einer weiteren Ausführung umfasst der Kolbenring einen Kolbenringkörper aus Gusseisen oder einen Kolbenringkörper, der Gusseisen umfasst.

Im Folgenden wird die vorliegende Erfindung anhand von schematischen und nicht maßstabgetreuen Figuren näher erläutert.

Figur 1 zeigt einen Kolbenring mit mehreren konzentrischen thermisch gespritzten Schichten an einer Außenseite eines Ringkörpers.

Figur 2 zeigt einen Kolbenring mit einer spiralförmigen umlaufenden thermisch gespritzten Schicht an einer Außenseite eines Ringkörpers, die mindestens einen Materialgradienten in Umfangsrichtung aufweist.

Figur I zeigt einen Kolbenring 2 mit einem Ringkörper 4, auf dessen Außenseite nacheinander verschiedene thermisch gespritzte Lagen aufgebracht sind. Direkt auf die Außenseite ist eine Notlaufschicht 6 aufgebracht, die sich mit einer Dicke um den gesamten Kolbenring erstreckt. Die Notlaufschicht 6 kann ebenfalls zwei oder mehr konzentrische Lagen umfassen. Die Notlaufschicht 6 ist dabei mit Partikeln aus Al₂O₃ versehen, die dieser Schicht eine besonders hohe Härte verleihen. Es kann ebenfalls vorgesehen sein, dotierte Al₂O₃ Partikel zu verwenden. Beispielsweise mit Chrom dotiertes Al₂O₃ kann der Notlaufschicht eine rote Farbe verleihen. Mit Fe²⁺, Fe³⁺, Ti⁴⁺ Co²⁺, Fe³⁺, Ti³⁺, Ti⁴⁺, Co²⁺ oder V⁴⁺ dotierten Al₂O₃ lassen sich auch anderen Farben der Notlaufschicht erreichen. Auf der Notlaufschicht 6 ist eine Verschleiß-Indikatorschicht 8 aufgebracht die ebenfalls überall die gleiche Dicke aufweisen soll und ein oder zwei thermisch gespritzte Lagen umfassen kann. Die Verschleißindikator-Schicht 8 kann dabei mit Kupfer versetzt sein, um durch eine leuchtende Kupferfarbe Verschleißgrenze einer Verschleißschutzschicht anzuzeigen. Auf der Verschleißindikator-Schicht 8 ist eine Verschleißschutzschicht 10 durch thermisches Spritzen aufgetragen. Die Verschleißschutzschicht 10 kann dabei mehrere thermisch gespritzte Lagen umfassen. Es kann sogar vorgesehen sein, die einzelnen Lagen der Verschleißschutzschicht 10 durch verschiedenen Füllstoffe farblich zu markieren, wodurch es möglich wird einen ungleichmäßigen Verschleiß einfach durch Betrachten der Ringlauffläche festzustellen, die Übergangslinien zwischen zwei unterschiedlich gefärbten Lagen der Verschleißschutzschicht 10 entsprechen dabei den Höhenlinien einer Landkarte, wodurch sich auf einen Blick die Art und die Ungleichmäßigkeit eines Verschleißes erkennen lässt. Ein solcher Indikatorring kann ebenfalls dazu verwendet werden, entsprechende Ringe herzustellen die von Beginn an eine ungleichmäßige Beschichtung aufweisen, die jedoch bei einem ungleichmäßigen Verschleiß zu einer gleichmäßigen RestSchicht- bzw- Lagendicke bei einem verschlissenen Kolbenring führt.

Auf der Verschleißschutzschicht 10 befinden sich weiter mehrere Lagen einer Einlaufschicht bzw. thermisch gespritzte Einlauflagen 12, die einen höheren Anteil an Festschmierstoffen umfassen und so einen Einlaufvorgang des Kolbenrings ohne bzw. mit stark verringertem Verschleiß einer Zylinderinnenwand ermöglichen. Die thermisch gespritzten Lagen können dabei nacheinander auf dem Kolbenring aufgebracht werden. Die einzelnen Lagen sollen dabei eine möglichst gleichmäßige Dicke aufweisen, und möglichst konzentrisch angeordnet sein. Die thermisch gespritzten Lagen können aufgespritzt werden, bevor der Kolbenring bzw. der Kolbenringkörper an einem Stoßende 14 aufgeschnitten wird.

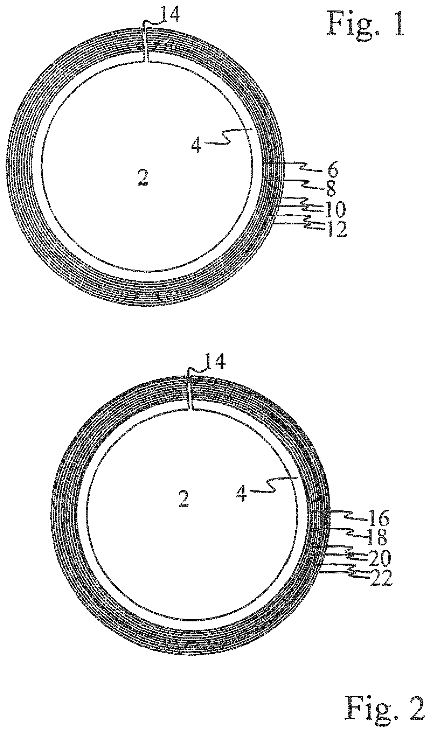

Figur 2 zeigt einen Kolbenring, der einen ähnlichen Aufbau wie der Kolbenring von Figur 1 aufweist. Anstelle von mehreren Lagen wird dieser Kolbenring jedoch in einem einzigen Arbeitsgang mit einer einzigen sich spiralförmig um die Außenseite erstreckenden thermisch gespritzten Lage hergestellt. Der Kolbenring 2 umfasst dabei den gleichen Kolbenringkörper 4 wie er in Figur 1 dargestellt ist. Anstatt nacheinander mehrere Lagen thermisch aufzuspritzen wird damit begonnen eine einzelne Lage mit einer ersten Zusammensetzung in Umfangsrichtung aufzubringen. Sobald die erste Lage bzw. eine Umdrehung beendet ist, wird ohne den thermischen Spritzprozess zu unterbrechen, die erste Lage weitergespritzt bis so zwei Schichten übereinanderliegen. Die ersten beiden Schichten stellen dabei eine Notlaufschicht 16 dar, die eine besonders hohe Festigkeit aufweist. Der Spritzvorgang wird weitergeführt, wobei bei einer dritten und vierten Umdrehung des Kolbenrings die Zusammensetzung der durchgehenden Schicht zu einem geringeren Al₂O₃ Anteil und einem höheren Kupferanteil verändert wird, wodurch eine spiralförmige VerschleißIndikatorschicht 18 gebildet wird. Nach den ersten 2 bis 4 Umdrehungen wird dann ein Karbid (Molybdän, Chrom, Wolfram, ...) als Zusatzstoff verwendet, um bei den nächsten 8 bis 16 Umdrehungen eine mehrlagige spiralförmige Verschleißschutzschicht 20 aufzubringen. Danach kann wiederum, ohne den thermischen Spritzvorgang zu unterbrechen, die Zusammensetzung des gespritzten Materials auf ein Material mit einem höheren Feststoffanteil geändert werden, wodurch bei den darauf folgenden spiralförmigen Lagen eine spiralförmige Einlaufschicht 22 gebildet wird. Durch angepasste Spritz- und Umlaufparameter kann die letzte Lage langsam ausgedünnt werden, wodurch eine insgesamt zylindrische Außenfläche erreicht werden kann. Hier werden die verschiedenen Funktionsschichten bzw. Funktionslagen in einem einzigen ununterbrochenen Spritzvorgang aufgebracht, wobei die einzelne spiralförmige thermisch gespritzte Lage lediglich in Umfangsrichtung verschiedene Gradienten aufweist, die jeweils einen Übergang zwischen einer Notlaufschicht, einer Verschleißindikatorschicht einer Verschleißschutzschicht und einer Einlaufschicht darstellen. Dabei können die Übergangsbereiche relativ kurz gewählt werden. Es ist jedoch ebenfalls möglich einen Materialgradienten über eine gesamte Umdrehung auszudehnen. In der Figur 2 umfasst der Übergangbereich jeweils einen Viertelkreis, der sich von einer 12-Uhr-Position zu einer 3-Uhr-Position erstreckt. Auch hier kann die thermisch gespritzte Lage mit den mehreren Gradienten aufgespritzt werden, bevor der Kolbenring bzw. der Kolbenringkörper an einem Stoßende 14 aufgeschnitten wird.

### Bezugszeichenliste

- 2: Kolbenring
- 4: Kolbenringkörper
- 6: Notlaufschicht / Notlauflage
- 8: Verschleiß-Indikatorschicht / -lagen
- 10: Verschleißschutzschicht / -lagen
- 12: Einlaufschicht / -lagen
- 14: Stoß
- 16: spiralförmige Notlaufschicht / Notlauflage
- 18: spiralförmige Verschleiß-Indikatorschicht / -lagen
- 20: spiralförmige Verschleißschutzschicht / -lagen
- 22: spiralförmige Einlaufschicht / -lagen

## Patentansprüche

1. Kolbenring (2) für Zweitaktmotoren mit einer Verschleißanzeige, umfassend einen Kolbenringkörper (4) mit einer Außenseite, zwei Kolbenringflanken und einer Kolbenringinnenfläche,
wobei auf der Außenseite mindestens zwei radial übereinander liegende Lagen thermisch gespritzter Schichten vorgesehen sind, die mindestens zwei verschiedene Farben in einer festen Reihenfolge aufweisen und dadurch farblich unterscheidbar sind, wobei die radial unterste Lage bzw. unterste Lagen durch Beimischung von Cu oder CuFeAl rötlich gefärbt sind, wobei bevorzugt der Kupferanteil der untersten Lage bzw. untersten Lagen zwischen 30 und 50 Gew.-% beträgt,
**dadurch gekennzeichnet, dass** mindestens drei radial übereinander liegende Lagen thermisch gespritzter Schichten vorgesehen sind, die mit drei verschiedenen Farben in einer jeweils festen Reihenfolge versehen sind.

2. Kolbenring (2) gemäß Anspruch 1,
**dadurch gekennzeichnet, dass** der Kolbenring (2) mindestens eine thermisch gespritzte Lage umfasst, die sich spiralförmig in Umfangsrichtung um die Lauffläche erstreckt.

3. Kolbenring (2) gemäß Anspruch 2,
**dadurch gekennzeichnet, dass** die spiralförmig thermisch gespritzte Lage in Umfangsrichtung einen Materialgradienten umfasst.

4. Kolbenring (2) gemäß nach Anspruch 2 oder 3, wobei eine unterste thermisch gespritzte Lage oder ein Anfangsbereich einer spiralförmig thermisch gespritzten Lage einen Füllstoff umfasst, der der Lage oder dem Anfangsbereich eine charakteristische Farbe verleiht.

5. Kolbenring (2) gemäß Anspruch 4, wobei die unterste thermisch gespritzte Lage oder ein Anfangsbereich der spiralförmig thermisch gespritzte Lage einen Füllstoff umfasst, der der Lage oder dem Anfangsbereich eine Notlaufeigenschaft verleiht.

6. Kolbenring (2) gemäß Anspruch 5, wobei mindestens eine mittlere Lage oder ein Mittelbereich der spiralförmig thermisch gespritzten Lage einen Füllstoff umfasst, der der mindestens einen mittleren Lage oder dem Mittelbereich der spiralförmig thermisch gespritzten Lage Verschleißeigenschaften verleiht, und wobei mindestens eine obere Lage oder ein Endbereich der spiralförmig thermisch gespritzten Lage eine Einlaufschicht (12/22) umfasst, die mit Festschmierstoffen versehen ist.

7. Kolbenring (2) gemäß einen der vorstehenden Ansprüche, wobei mindestens die unterste thermisch gespritzte Lage oder der Anfangsbereich der spiralförmig thermisch gespritzte Lage Al₂O₃ umfasst.

8. Kolbenring (2) gemäß Anspruch 6, wobei die mindestens eine thermisch gespritzte obere Einlauflage (12/22) Mo, Ni, Cr, Cr₃C₂, Mo₂C oder eine Kombination davon umfasst.

9. Kolbenring (2) gemäß einen der vorstehenden Ansprüche, wobei mindestens die thermisch gespritzte Lage oder die spiralförmig thermisch gespritzte Lage eine jeweilige Lagendicke von 20-30µm umfasst.

10. Kolbenring (2) gemäß einen der vorstehenden Ansprüche, wobei mehrere der mittleren thermisch gespritzte Lagen vorhanden sind oder sich der Mittelbereich einer spiralförmig thermisch gespritzte Lage mehrfach um den gesamten Kolbenring (2) erstreckt, wobei jeweils zwei aufeinanderliegende Lagen mit verschiedenen Zusatzstoffen farblich voneinander abgesetzt sind.

11. Kolbenring (2) gemäß Anspruch 6 oder einem von Anspruch 6 abhängigen Anspruch, wobei die mindestens eine unterste thermisch gespritzte Lage oder ein Anfangsbereich einer spiralförmig thermisch gespritzte Lage eine Dicke zwischen 20 und 30µm aufweist,
die mindestens eine thermisch gespritzte Zwischenlage oder ein Zwischenbereich einer spiralförmig thermisch gespritzten Lage eine Dicke zwischen 20 und 60µm aufweist,
die mindestens eine mittlere thermisch gespritzte Lage oder der Mittelbereich einer spiralförmig thermisch gespritzte Lage eine Dicke zwischen 200 und 400µm aufweist, und
die mindestens eine obere Einlauflage (12/33) eine Dicke zwischen 200 und 400µm aufweist.

12. Kolbenring (2) gemäß einen der vorstehenden Ansprüche, wobei der Kolbenringkörper (4) aus Gusseisen besteht oder Gusseisen umfasst.

## Claims

1. A piston ring (2) for two-stroke engines with a wear display, comprising a piston ring body (4) with an outer face, two piston ring flanks and a piston ring inner surface,
wherein at least two radially superimposed layers of thermally sprayed coatings are provided on the outer face, said layers having at least two different colours in a fixed sequence and thereby being able to be differentiated by colour, wherein the radially lowermost layer or lowermost layers are dyed in a reddish colour by adding Cu or CuFeAl, wherein the copper component of the lowermost layer or the lowermost layers is preferably between 30 and 50 wt.%,
**characterized in that** at least three radially superimposed layers of thermally sprayed coatings which are supplied with three different colours, in each case in a fixed sequence, are provided.

2. The piston ring (2) according to Claim 1, **characterized in that** the piston ring (2) comprises at least one thermally sprayed layer which extends in a spiral-shaped manner in the circumferential direction around the contact surface.

3. The piston ring (2) according to Claim 2, **characterized in that** the spiral-shaped thermally sprayed layer comprises a material gradient in the circumferential direction.

4. The piston ring (2) according to Claim 2 or 3, wherein a lowermost thermally sprayed layer or a starting region of a spiral-shaped thermally sprayed layer comprises a filler which provides the layer or the starting region with a characteristic colour.

5. The piston ring (2) according to Claim 4, wherein the lowermost thermally sprayed layer or a starting region of the spiral-shaped thermally sprayed layer comprises a filler which provides the layer or the starting region with an emergency running property.

6. The piston ring (2) according to Claim 5, wherein at least one central layer or a central region of the spiral-shaped thermally sprayed layer comprises a filler which provides the at least one central layer or the central region of the spiral-shaped thermally sprayed layer with wear properties, and wherein at least one upper layer or an end region of the spiralshaped thermally sprayed layer comprises a run-in layer (12/22) which is provided with solid lubricants.

7. The piston ring (2) according to one of the preceding claims, wherein at least the lowermost thermally sprayed layer or the starting region of the spiral-shaped thermally sprayed layer comprises Al₂O₃.

8. The piston ring (2) according to Claim 6, wherein the at least one thermally sprayed upper run-in layer (12/22) comprises Mo, Ni, Cr, Cr₃C₂, Mo₂C or a combination thereof.

9. The piston ring (2) according to one of the preceding claims, wherein at least the thermally sprayed layer or the spiral-shaped thermally sprayed layer in each case comprises a layer thickness of 20 - 30 µm.

10. The piston ring (2) according to one of the preceding claims, wherein a plurality of the central thermally sprayed layers are present or the central region of a spiral-shaped thermally insulated layer extends repeatedly around the entire piston ring (2), wherein in each case two successive layers comprising additives, which are different from one another in terms of colour, are deposited.

11. The piston ring (2) according to Claim 6 or a claim dependent on Claim 6,
wherein the at least one lowermost thermally sprayed layer or a starting region of a spiral-shaped thermally sprayed layer has a thickness of between 20 and 30 µm,
the at least one thermally sprayed intermediate layer or an intermediate region of a spiral-shaped thermally sprayed layer has a thickness of between 20 and 60 µm,
the at least one central thermally sprayed layer or the central region of a spiral-shaped thermally sprayed layer has a thickness of between 200 and 400 µm, and
the at least one upper run-in layer (12/33) has a thickness of between 200 and 400 µm.

12. The piston ring (2) according to one of the preceding claims, wherein the piston ring body (4) consists of cast iron or comprises cast iron.

## Revendications

1. Segment de piston (2) pour des moteurs à deux temps et avec un indicateur d'usure, comprenant un corps (4) de segment de piston avec un côté extérieur, deux flancs de segment de piston et une surface intérieure de segment de piston,
au moins deux couches superposées radialement, en strates projetées thermiquement, étant prévues sur la face extérieure, qui présentent au moins deux couleurs différentes dans un ordre fixe et qui peuvent ainsi être distinguées par leur couleur, la ou les couches radialement les plus inférieures étant colorées en rouge par mélange de Cu ou de CuFeAl, la teneur en cuivre de la ou des couches les plus inférieures étant de préférence comprise entre 30 et 50 % en poids,
**caractérisé en ce qu'**il est prévu au moins trois couches superposées radialement, en strates projetées thermiquement, qui présentent trois couleurs différentes dans un ordre respectivement fixe.

2. Segment de piston (2) selon la revendication 1,
**caractérisé en ce que** le segment de piston (2) comprend au moins une couche projetée thermiquement qui s'étend en spirale dans la direction circonférentielle autour de la surface de course.

3. Segment de piston (2) selon la revendication 2,
**caractérisé en ce que** la couche en spirale réalisée par projection thermique comprend un gradient de matériau dans la direction circonférentielle.

4. Segment de piston (2) selon la revendication 2 ou la revendication 3, dans lequel une couche inférieure réalisée par projection thermique ou une zone de début d'une couche en spirale réalisée par projection thermique comprend une charge qui confère une couleur caractéristique à la couche ou à la zone de début.

5. Segment de piston (2) selon la revendication 4, dans lequel la couche inférieure réalisée par projection thermique ou une zone de début de la couche en spirale réalisée par projection thermique comprend une charge qui confère à la couche ou à la zone de début une propriété de fonctionnement en cas d'urgence.

6. Segment de piston (2) selon la revendication 5, dans lequel au moins une couche intermédiaire ou une zone centrale de la couche projetée thermiquement en spirale comprend une charge qui confère des propriétés d'usure à ladite au moins une couche intermédiaire ou zone centrale de la couche projetée thermiquement en spirale, et dans lequel au moins une couche supérieure ou une zone d'extrémité de la couche en spirale comprend une couche de rodage (12/22) qui est pourvue de lubrifiants solides.

7. Segment de piston (2) selon l'une quelconque des revendications précédentes, dans lequel au moins la couche inférieure obtenue par projection thermique ou la zone de début de la couche obtenue par projection thermique en spirale comprend de l'Al₂O₃.

8. Segment de piston (2) selon la revendication 6, dans lequel ladite au moins une couche de rodage supérieure (12/22) projetée thermiquement comprend Mo, Ni, Cr Cr₃C₂, Mo₂C ou une combinaison de ceux-ci.

9. Segment de piston (2) selon l'une quelconque des revendications précédentes, dans lequel au moins la couche projetée thermiquement ou la couche projetée thermiquement en spirale comprend une épaisseur de couche respective allant de 20 à 30 µm.

10. Segment de piston (2) selon l'une des revendications précédentes, dans lequel plusieurs des couches médianes projetées thermiquement sont présentes ou la zone centrale d'une couche projetée thermiquement en spirale s'étend plusieurs fois autour de l'ensemble du segment de piston (2), deux couches superposées étant de couleurs différentes et contiennent des additifs différents.

11. Segment de piston (2) selon la revendication 6 ou une revendication dépendante de la revendication 6, dans lequel ladite au moins une couche inférieure projetée thermiquement ou une zone de début d'une couche de projection thermique en spirale présente une épaisseur comprise entre 20 et 30 µm,
ladite au moins une couche intermédiaire projetée thermiquement ou une zone intermédiaire d'une couche projetée thermiquement en spirale a une épaisseur comprise entre 20 et 60 µm,
ladite au moins une couche intermédiaire projetée thermiquement ou la zone intermédiaire d'une couche projetée thermiquement en spirale présente une épaisseur comprise entre 200 et 400 µm, et
ladite au moins une couche d'entrée supérieure (12/33) présente une épaisseur comprise entre 200 et 400 µm.

12. Segment de piston (2) selon l'une quelconque des revendications précédentes, dans lequel le corps (4) de segment de piston est en fonte ou comprend de la fonte.
